Europäisches Patentamt

European Patent Office

Office européen des brevets

(19)

(11) Numéro de publication : **0 292 392 B1**

(12) FASCICULE DE BREVET EUROPEEN

(45) Date de publication du fascicule du brevet :
18.09.91 Bulletin 91/38

(51) Int. Cl.⁵ : **B60G 17/02, B60G 11/18**

(21) Numéro de dépôt : 88401216.2

(22) Date de dépôt : 19.05.88

(54) Essieu à suspension par barres de torsion et correction d'assiette.

(30) Priorité : 20.05.87 FR 8707351

(43) Date de publication de la demande :
23.11.88 Bulletin 88/47

(45) Mention de la délivrance du brevet :
18.09.91 Bulletin 91/38

(84) Etats contractants désignés :
DE GB IT

(56) Documents cités :
EP-A- 0 197 850
FR-A- 2 393 690
FR-A- 2 561 591
GB-A- 2 011 327

(73) Titulaire : AUTOMOBILES PEUGEOT
75, avenue de la Grande Armée
F-75116 Paris (FR)
Titulaire : AUTOMOBILES CITROEN
62 Boulevard Victor-Hugo
F-92200 Neuilly-sur-Seine (FR)

(72) Inventeur : Penot, Jean
127, avenue de la République
F-94800 Villejuif (FR)
Inventeur : Barthelemy, André
52, route de Limours
F-78470 St Remy-Les-Chevreuse (FR)
Inventeur : Clairenbeaud, Michel
41, rue de Vauhallan
F-91120 Palaiseau (FR)

(74) Mandataire : Boivin, Claude
9, rue Edouard-Charton
F-78000 Versailles (FR)

## Description

La présente invention concerne un essieu à suspension à barres de torsion comportant une traverse solidaire de la caisse et sur laquelle deux bras supports de roue sont montés pivotants et libres en translation dans la direction de leur axe de pivotement, chaque bras étant relié à la traverse par une barre de torsion qui est parallèle à l'axe de pivotement du bras et a une longueur sensiblement égale à celle de l'essieu, la barre de torsion ayant l'une de ses extrémités immobilisée en rotation par rapport au bras et son autre extrémité ancrée sur la traverse au voisinage de l'autre bras. Un essieu de ce genre est décrit dans le brevet français 2.393.690. Mais cet essieu n'est pas à correction d'assiette et les ancrages des barres de torsion sur la traverse sont fixes.

Le document EP-A-0197850 décrit un essieu à correction d'assiette dans lequel chaque barre de torsion a pour longueur la moitié de la longueur de l'essieu. Les deux ancrages des barres de torsion sont ainsi confondus au même endroit au milieu de l'essieu et un moteur électrique permet de faire pivoter l'ancrage commun pour effectuer une correction d'assiette. Mais la disposition prévue est inapplicable lorsque les barres de torsion ont une longueur sensiblement égale à celle de l'essieu de sorte que les deux ancrages sont situés aux deux extrémités de l'essieu.

La présente invention a pour objet un essieu du type décrit dans le brevet français 2.393.690, mais qui est à correction d'assiette. Cet essieu est caractérisé par un moteur électrique à deux sorties qui est porté par la traverse, en ce que chacune des sorties du moteur est reliée par un arbre flexible à un réducteur monté sur un support solidaire de la traverse au voisinage de l'ancrage de l'une des barres de torsion, et en ce qu'il comporte des moyens pour que le réducteur entraîne ledit ancrage de sorte que le moteur fait pivoter simultanément et d'un même angle les ancrages des deux barres.

On a décrit ci-après, à titre d'exemple non limitatif, un mode de réalisation d'un essieu arrière selon l'invention, avec référence aux dessins annexés dans lesquels :

La Figure 1 représente l'essieu moitié en plan, moitié en coupe ;

La Figure 2 est une vue à plus grande échelle d'une extrémité de l'essieu, avec arrachement partiel ;

La Figure 3 est une vue en coupe suivant III-III de la Figure 2 ;

La Figure 4 est une vue en coupe de l'autre extrémité de l'essieu ;

La Figure 5 est une vue en coupe d'un réducteur suivant V-V de la Figure 3 ;

La Figure 6 est une vue en coupe d'un réducteur suivant VI-VI de la Figure 3.

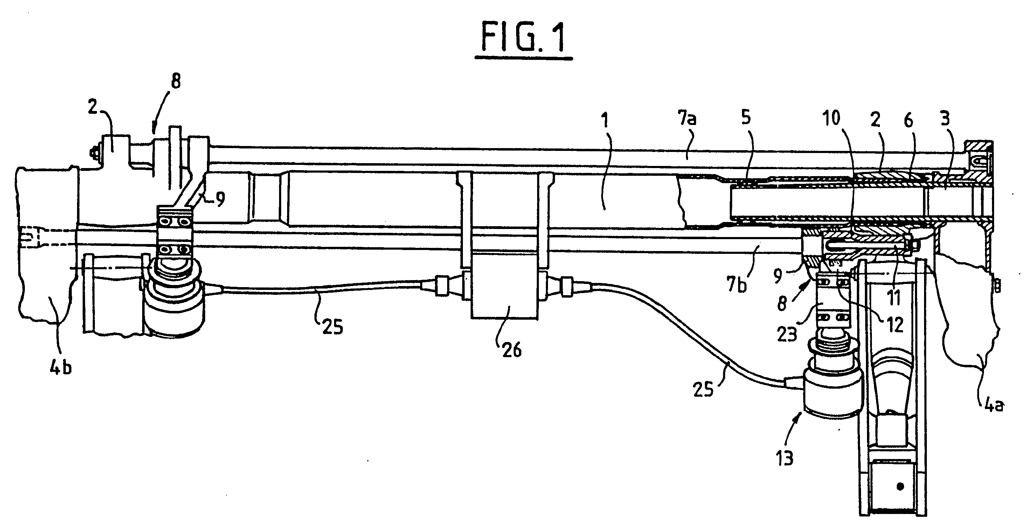

A la Figure 1, on voit un essieu de véhicule automobile qui est constitué par une traverse tubulaire 1 dont chacune des extrémités est solidaire d'un élément 2 permettant la fixation de l'essieu à la structure du véhicule et constitué par exemple par un longeron.

Un axe 3 solidaire d'un bras de support de roue 4a ou 4b est monté pivotant et mobile en translation dans la traverse 1 et dans l'élément 2 par l'intermédiaire de roulements 5 et 6. Chacun de ces bras supports de roue est relié à l'élément 2 opposé par une barre de torsion 7a ou 7b qui est parallèle à la traverse 1, dont la longueur est sensiblement celle de cette traverse et dont une extrémité est ancrée directement dans le bras support de roue alors que l'autre extrémité est reliée à l'élément 2 par un ancrage qui est désigné au dessin d'une façon générale par la référence 8.

Comme on le voit plus particulièrement à la Figure 4, l'extrémité de la barre de torsion 7a ou 7b ancrée à l'élément 2 présente une partie cannelée sur laquelle est calé un levier pivotant 9 et une partie lisse montée pivotante dans un palier 10 lui-même vissé dans l'élément 2. L'une des extrémités d'une tige filetée 11, qui traverse le palier 10, est fixée à l'élément 2 alors que son autre extrémité est engagée dans un taraudage borgne de l'extrémité de la barre de torsion, le jeu du filetage étant compatible avec le pivotement maximal de l'ancrage.

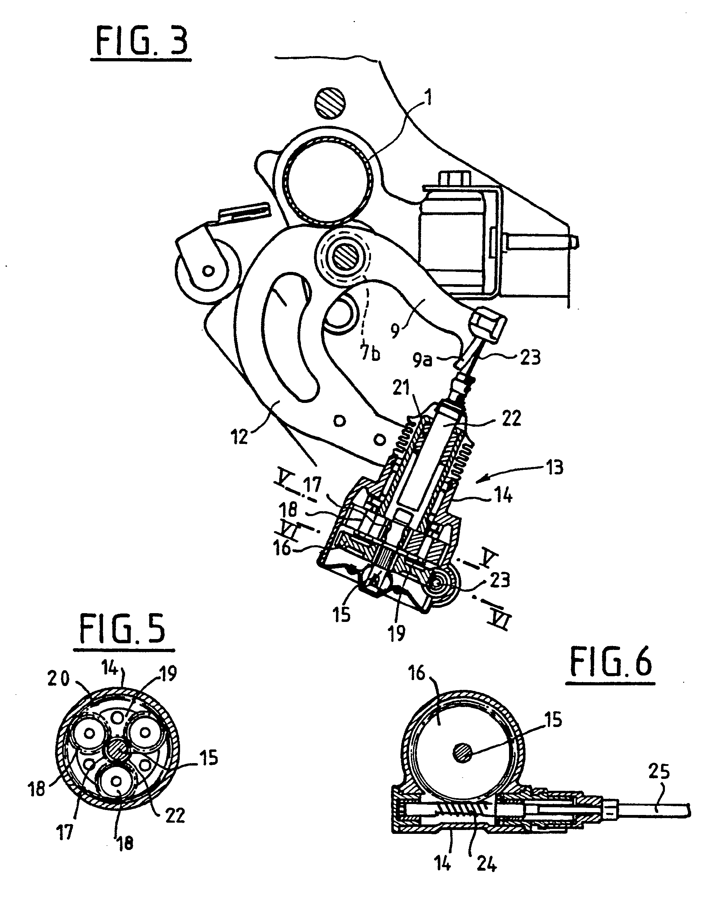

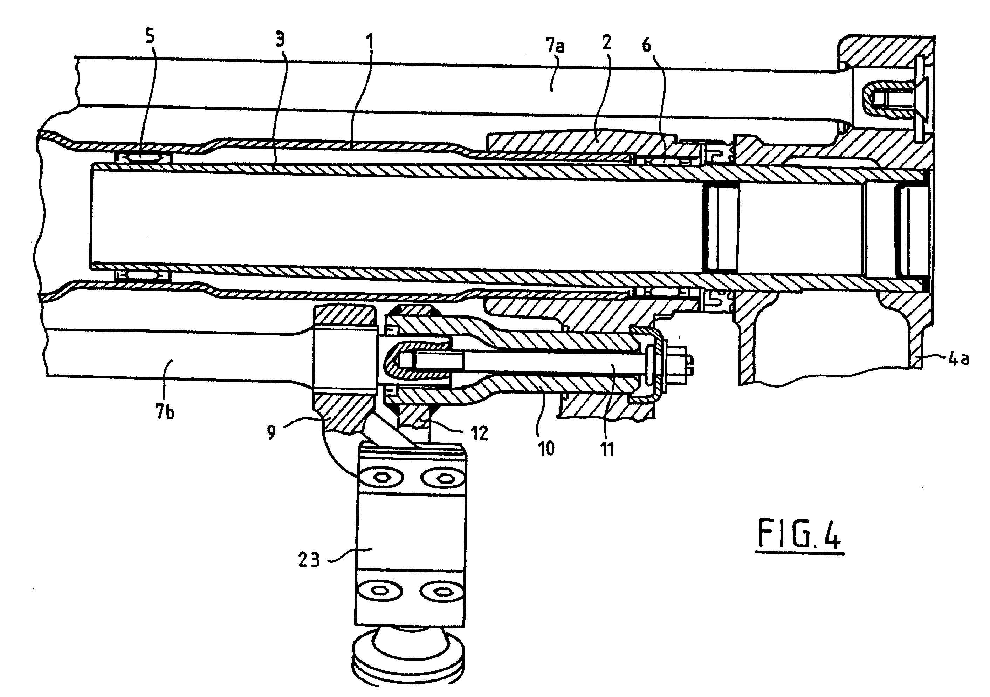

Le levier pivotant 9 est relié à un support 12 solidaire de l'élément 2, par un réducteur désigné dans son ensemble par la référence 13. Ce réducteur 13 comprend un boîtier 14 fixé au support 12 et dans lequel est monté à rotation un arbre 15 portant une roue dentée 16 et un pignon 17 (voir Figure 3). Ce pignon 17 est en prise avec des pignons 18 qui sont portés par un porte-satellites 19 et en prise avec une denture 20 de la périphérie interne du boîtier 14. Le porte-satellites 19 est solidaire d'un écrou 21 qui est monté sur une vis 22 pouvant coulisser par rapport au boîtier 14 et immobilisée angulairement. Une lame flexible 23 fixée au levier 9 et s'enroulant sur une partie cylindrique 9a de ce levier, est fixée à la vis 22.

La roue dentée 16 est en prise avec une vis sans fin 24 montée à rotation dans le boîtier 14 et sur laquelle est fixée l'une des extrémités d'un flexible sous gaine 25.

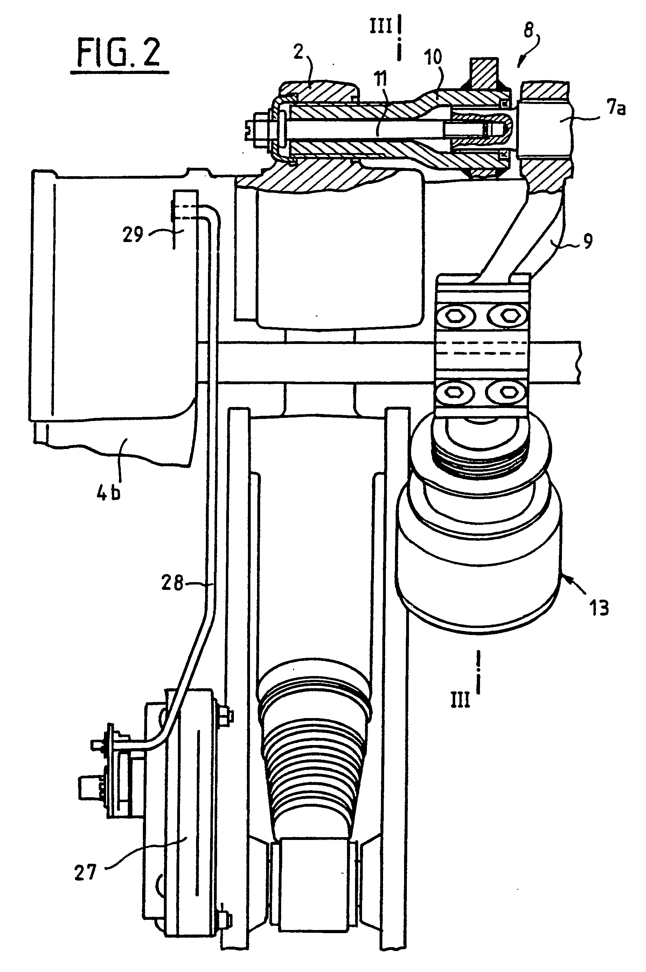

La seconde extrémité des deux flexibles 25 est reliée à un moteur électrique 26 à deux sorties. Ce moteur est commandé par un capteur de position 27 qui pilote le démarrage et l'arrêt du moteur dans un sens de rotation ou dans le sens opposé et qui est relié par une tringle 28 à une patte 29 entraînée en rotation par le moyeu du bras de roue (voir Figure 2).

Lorsque le capteur 27 commande le moteur 26, les deux leviers 9 pivotent simultanément et, comme les deux réducteurs 13 sont identiques, ils pivotent d'un même angle.

## Revendications

1. Essieu à suspension par barres de torsion et correction d'assiette comportant une traverse (1) solidaire de la caisse et sur laquelle deux bras supports de roue (4a et 4b) sont montés pivotants et libres en translation dans la direction de leur axe de pivotement, chaque bras étant relié à la traverse par une barre de torsion (7a ou 7b) qui est parallèle à l'axe de pivotement du bras et a une longueur sensiblement égale à celle de l'essieu, la barre de torsion ayant l'une de ses extrémités immobilisée en rotation par rapport au bras et son autre extrémité ancrée sur la traverse au voisinage de l'autre bras, caractérisé par un moteur électrique (26) à deux sorties qui est porté par la traverse, en ce que chacune des sorties du moteur est reliée par un arbre flexible (25) à un réducteur (13) monté sur un support solidaire de la traverse au voisinage de l'ancrage de l'une des barres de torsion, et en ce qu'il comporte des moyens pour que le réducteur (13) entraîne ledit ancrage de sorte que le moteur (26) fait pivoter simultanément et d'un même angle les ancrages des deux barres.

2. Essieu selon la revendication 1, caractérisé en ce que l'ancrage de chacune des barres (7a et 7b) comprend une partie cannelée engrenant avec un levier pivotant (9), et une extrémité lisse pivotant dans un palier (10) solidaire de la traverse (1).

3. Essieu selon la revendication 2, caractérisé en ce que, pour verrouiller l'ancrage en translation, il est prévu une tige filetée (11) fixée par l'une de ses extrémités sur un élément (2) solidaire de la traverse (1) et dont l'autre extrémité est engagée dans un alésage axial fileté borgne de l'extrémité de la barre (6), le jeu de filetage étant compatible avec le pivotement maximal de l'ancrage.

4. Essieu selon la revendication 2, caractérisé en ce qu'il comporte des moyens pour que chaque réducteur (13) entraîne le levier pivotant (9) correspondant.

5. Essieu selon l'une des revendications 1 à 4, caractérisé en ce que le réducteur (13) comporte un train épicycloïdal et des moyens propres à transformer la rotation de l'arbre flexible (25) en déplacement longitudinal d'une vis (22) en prise avec un écrou (21) arrêté en translation.

6. Essieu selon la revendication 5, caractérisé en ce que la vis (22) est reliée par une lame flexible (23) à un secteur solidaire du levier pivotant (9) et coaxial à la barre.

7. Essieu selon l'une des revendications 1 à 6, caractérisé en ce qu'il comporte un capteur (27) propre à détecter la rotation du moyeu de l'un des bras de roue et à donner un signal agissant sur le moteur (26).

## Patentansprüche

1. Achse mit Drehstabfederung und Niveaueregulierung mit einer Traverse (1), die mit der Karosserie verbunden ist und an der zwei Rad-Lenkerarme (4a und 4b) befestigt sind, die schwenkbar und zur Verschiebung in Richtung ihrer Schwenkachse frei beweglich sind, wobei jeder Arm mit der Traverse durch einen Drehstab (7a oder 7b) verbunden ist, der parallel zur Schwenkachse der Arme angeordnet ist und genau dieselbe Länge wie die Achse besitzt, wobei der Drehstab mit einem seiner Enden mit dem Arm drehfest verbunden ist und sein anderes Ende an der Traverse nahe dem anderen Arm verankert ist, gekennzeichnet durch einen Elektromotor (26) mit zwei Abtrieben, der von der Traverse getragen ist, und dadurch, daß jeder der Abtriebe des Motors durch eine biegsame Welle (25) mit einem Drehzahlminderer (13) verbunden ist, der auf einem mit der Traverse starr verbundenen Auflager nahe der Verankerung eines der Drehstäbe befestigt ist, und dadurch, daß sie eine Einrichtung der Art aufweist, daß der Drehzahlminderer (13) die Verankerung in der Weise antreibt, daß der Motor (26) gleichzeitig und mit demselben Winkelgrad die Verankerungen beider Drehstäbe zur Drehung bringt.

2. Achse nach Anspruch 1, dadurch gekennzeichnet, daß die Verankerung jedes der Stäbe (7a und 7b) einen mit Rippen versehenen Bereich, der mit einem Schwenkhebel (9) in Eingriff steht, und ein glattes Ende aufweist, das sich in einem mit der Traverse (1) starr verbundenen Lager (10) dreht.

3. Achse nach Anspruch 2, dadurch gekennzeichnet, daß zur Blockierung der Verschiebung der Verankerung eine Schraubenspindel (11) vorgesehen ist, die an einem ihrer Enden mit einem mit der Traverse (1) starr verbundenen Teil (2) befestigt ist und deren anderes Ende in eine axiale Blindbohrung mit Gewinde am Ende des Stabes (6) eingreift, wobei das Spiel des Gewindes die maximale Verdrehung der Verankerung zuläßt.

4. Achse nach Anspruch 2, dadurch gekennzeichnet, daß sie eine derartige Einrichtung aufweist, daß jeder Drehzahlminderer (13) den entsprechenden Schwenkhebel (9) antreibt.

5. Achse nach einem der Ansprüche 1 bis 4, dadurch gekennzeichnet, daß der Drehzahlminderer (13) ein epicycloidisches Umlaufgetriebe und eine Einrichtung aufweist, die geeignet ist, die Drehung der flexiblen Welle (25) in eine Längsbewegung einer Schraube (22) umzuwandeln, die in Eingriff mit einer in ihrer Bewegung fixierten Mutter (21) steht.

6. Achse nach Anspruch 5, dadurch gekennzeichnet, daß die Schraube (22) durch eine flexible Lamelle (23) mit einem Teil vereinigt ist, das mit dem Schwenkhebel (9) kraftschlüssig verbunden ist und koaxial zum Stab angeordnet ist.

7. Achse nach einem der Ansprüche 1 bis 6, **dadurch gekennzeichnet**, daß sie einen Meßfühler (27) aufweist, der geeignet ist, die Drehung der Nabe des einen der Rad-Lenkerarme anzuzeigen und ein Signal zur Betätigung des Motors (26) abzugeben.

## Claims

1. Torional bar and stable position correction suspension axle comprising a crossmember (1) integral with the body and on which two support wheel arms (4a and 4b) are mounted pivoting and translation-free in the direction of their pivoting axis, each arm being connected to the crossmember by a torsional bar (7a or 7b) parallel to the pivoting axis of the arm and having a length roughly equal to that of the axle, the torsional bar having one of its extremities rotary-immobilized with respect to the arm and its other extremity anchored onto the crossmember close to the other arm, characterized by a twin-output electric motor (26) borne by the crossmember, in that each of the outputs of the motor is connected by a flexible shaft (25) to a reducer (13) mounted on a support integral with the crossmember close to the anchorage point of one of the torsional bars, and in that it comprises means so that the reducer (13) drives said anchorage for the motor (26) to be able to simultaneously make the anchorages of the two bars pivot by a given angle.

2. Axle according to claim 1, wherein the anchorage of each of the bars (7a and 7b) includes a ribbed portion gearing with a pivoting lever (9) and one smooth extremity pivoting in a bearing (10) integral with the crossmember (1).

3. Axle according to claim 2, wherein, so as to lock anchorage in translation, a threaded rod (11) is provided secured by one of its extremities to an element (2) integral with the crossmember (1), the other extremity being engaged in an axial threaded dummy bore of the extremity of the bar (6), the play of the threading being compatible with the maximum pivoting of the anchorage.

4. Axle according to claim 2, wherein it comprises means so that each reducer (13) drives the corresponding pivoting lever (9).

5. Axle according to any one of claims 1 to 4, wherein the reducer (13) comprises a planetary gear train and means able to transform rotation of the flexible shaft (25) via the longitudinal movement of a screw (22) geared with a nut (21) stopped in translation.

6. Axle according to claim 5, wherein the screw (22) is connected by a flexible plate (23) to a sector integral with the pivoting lever (9) and coaxial to the bar.

7. Axle according to any one of claims 1 to 6, wherein it comprises a sensor (27) able to detect the rotation of the hub of one of the wheel arms and give a signal acting on the motor (26).

## FIG.1

EP 0 292 392 B1

## FIG. 2

EP 0 292 392 B1

## FIG. 3

## FIG. 5

## FIG. 6

7

FIG.4

EP 0 292 392 B1